# EUROPÄISCHE PATENTSCHRIFT

(11) **EP 2 452 564 B1**
(45) Veröffentlichungstag und Bekanntmachung des Hinweises auf die Patenterteilung: **07.10.2015**
(21) Anmeldenummer: 11186092.0
(22) Anmeldetag: 21.10.2011
(51) Int. Cl.: A22C 11/00

(54) **Vorrichtung und Verfahren zum Behandeln eines Wurststrangs**
Device and process for treating a string of sausages
Dispositif et méthode de traitement d'un chapelet de saucisses

(30) Priorität: 11.11.2010 DE 102010050925
(43) Veröffentlichungstag der Anmeldung: 16.05.2012
(73) Patentinhaber: HOWE Wurstwaren KG, 90451 Nürnberg (DE)
(72) Erfinder: Singer, Manfred, 92334 Berching (DE); Mallah, Marcel, 31226 Peine (DE)
(74) Vertreter: Blaumeier, Jörg

(56) Entgegenhaltungen:
- DE-A1-102009 058 080
- JP-A- 4 223 900
- US-A- 4 631 380
- US-A- 6 106 878

## Beschreibung

Die Erfindung betrifft eine Vorrichtung zum Behandeln eines Wurststrangs, bestehend aus mehreren hintereinander angeordneten Würsten mit einer Wursthülle aus einem organischen Material, die im Bereich zwischen zwei Würsten eine Abdrehung aufweist.

Zur Herstellung von Würsten wird üblicherweise mittels einer Füllmaschine das Wurstbrät durch ein Füllrohr in eine schlauchförmige Wursthülle gepresst. Mittels eines Abdrehmechanismus werden die einzelnen Wurstportionen, also die einzelnen Würste selber, gebildet, indem der Wurststrang gedreht wird, sodass sich der Strang lokal und unter Bildung einer Abdrehung der Wursthülle einschnürt. Die einzelnen Würste sind also über eine solche hüllenseitige Abdrehung voneinander getrennt. Der auf diese Weise gebildete Wurststrang wird sodann mittels einer Vereinzelungsvorrichtung getrennt. Hierzu wird der Wurststrang von zwei Förderbändern gegriffen, die den Wurststrang mit definierter Geschwindigkeit zu einer Schneideinrichtung transportieren, wo die einzelnen Würste im Bereich der Abdrehung getrennt werden. Die Vereinzelung erfolgt üblicherweise mittels zweier gegenläufiger oder rotierender Messer, die im Schnitt zusammenwirken, wobei eines der Messer auch als reiner Gegenhalter ausgeführt sein kann.

Bei vielen Wurstsorten wird als Wursthülle ein Naturdarm verwendet, also ein organisches Darmmaterial. Da es sich um ein natürliches Material handelt, weist es zwangsläufig keine homogene Dicke auf, vielmehr variiert die Materialdicke über die Darmlänge. Im Bereich der Abdrehungen, wo der Darm also zusammengedreht ist, ergibt sich zum einen ein relativ dicker Materialabschnitt, zum anderen kann dessen Dicke aufgrund unterschiedlicher Darmstärken von Abdrehung zu Abdrehung variieren. Auch ist das Darmmaterial sehr weich und elastisch. Diese Umstände bedingen, dass hohe Anforderungen an die Schneideinrichtung gestellt werden, das heißt, dass die Messer bzw. das Messer und der Gegenhalter extrem exakt und mit hoher Schneidkraft schneiden müssen, um die vollständige Durchtrennung sicherzustellen. Auch muss die Schneideinrichtung in der Lage sein, ohne Weiteres unterschiedliche Abdrehungsdicken sicher trennen zu können. Alternativ kann auch ein Hüllmaterial aus Kunststoff verwendet werden, das im Bereich der Abdrehungen ebenfalls zu schneiden ist, um die Würste zu trennen, wobei auch hier wegen der Elastizität des Kunststoffmaterials hohe Anforderungen an die Schneideinrichtung gestellt sind.

Aus US 4,631,380 A ist ein System zur Mikrowellenbehandlung von Materialien, die in loser Schüttung oder in mehr oder weniger pastöser oder flüssiger Form vorliegen, beispielsweise in Form von Körnern, Erde, Wolle, Harze etc., bekannt. Die Vorrichtung umfasst einen rohrförmigen Mikrowellenapplikator, dem mehrere separate Mikrowellenerzeugungseinrichtungen zugeordnet sind.

Aus JP 4 223 900 A ist eine Vorrichtung zum Behandeln eines Wurststrangs bekannt. Sie umfasst ein zuführendes Förderband, auf dem der Wurststrang angefördert wird, der anschließend über Luftdüsen trockengeblasen wird. Er gelangt in einen Mikrowellenapplikator, in dem drei separate Rollen vorgesehen sind, die den Wurststrang greifen.

Der Erfindung liegt damit das Problem zugrunde, eine Vorrichtung zum Behandeln eines Wurststrangs anzugeben, die eine Behandlung des Wurststrangs derart ermöglicht, dass auf einfache Weise eine Vereinzelung der Würste ermöglicht.

Zur Lösung dieses Problems ist erfindungsgemäß vorgesehen eine Vorrichtung gemäß Anspruch 1 und ein Verfahren gemäß Anspruch 16.

Mittels der erfindungsgemäßen Vorrichtung ist es möglich, den Wurststrang durch Applikation von Mikrowellenstrahlung thermisch zu behandeln, also Energie zuzuführen, die zu einer Erwärmung des behandelten Materials führt. Die Mikrowellenstrahlung kann entweder nur durch entsprechende Ansteuerung der Mikrowellenerzeugungseinrichtung im Bereich einer Abdrehung appliziert werden, das heißt, dass die Mikrowellenstrahlung getaktet erzeugt wird, wozu über eine geeignete Erfassungseinrichtung erfasst wird, wann eine Abdrehung im Applikationsbereich im rohrförmigen Mikrowellenapplikator ist. Bevorzugt aber wird die Mikrowellenstrahlung kontinuierlich zugeführt, das heißt, dass der gesamte Wurststrang, also Würste und Abdrehungen, mittels der Mikrowellenstrahlung beaufschlagt werden.

Hierzu zeichnet sich die erfindungsgemäße Vorrichtung durch einen rohrförmigen Mikrowellenapplikator aus, der mit einer extern zu diesem angeordneten Mikrowellenerzeugungseinrichtung, umfassend ein der Strahlungserzeugung dienendes Magnetron gekoppelt ist. Die erzeugte Mikrowellenstrahlung wird dem Mikrowellenapplikator zugeführt. Eine Fördereinrichtung transportiert den Wurststrang durch den länglichen, rohrförmigen Mikrowellenapplikator, wo er sodann in einem definierten Applikationsbereich der Mikrowellenstrahlung ausgesetzt wird. Während der Strahlungsapplikation kommt es zu einem Energieeintrag, der zu einer Materialerwärmung führt. Da es sich bei dem Hüllmaterial entweder um ein natürliches, organisches Material handelt, nämlich einen tierischen Darm, oder einen Kunstdarm, also ein ebenfalls organisches Kunststoffmaterial, kommt es infolge des Energieeintrags und der daraus resultierenden Erwärmung zu einer Veränderung des Materials bzw. der Materialstruktur. Es setzt im Falle eines Naturdarms ein Koagulationsprozess ein, das heißt, dass Eiweiße bzw. Proteine ihre Struktur verändern und Koagulieren. Dieser Prozess setzt bei einer Temperatur von üblicherweise mehr als 40 °C ein. Je mehr Energie eingetragen wird, umso höher ist die Erwärmung und umso stärker der Koagulationsprozess. Diese Koagulation führt wiederum zu einer Versprödung bzw. Verhärtung des Materials, das heißt, dass sich das organische Hüllmaterial versteift und seine Flexibilität verliert. Im Falle eines Kunstdarms kommt es durch den Energieeintrag und die Erwärmung zu einem Aufbruch der Bindungen und zu Vernetzungsvorgängen, woraus ebenfalls eine Versprödung resultiert. Je höher und je schneller der Energieeintrag ist, umso höher ist der Koagulationsgrad oder Vernetzungsgrad und umso größer der Grad der querschnittsmäßig gesehen einsetzenden Versprödung.

Es hat sich nun herausgestellt, dass mittels einer erfindungsgemäßen Vorrichtung mit einer Fördereinrichtung und einem länglichen, rohrförmigen Mikrowellenapplikator, umfassend eine definierte Strahlungsapplikationskammer, ein derart hoher Energieeintrag erreicht werden kann, dass es zu einer derart starken Versprödung der Abtrennungen kommt, dass diese mitunter nach dem Verlassen des Applikators bereits aufgetrennt vorliegen, mithin also die Würste bereits vereinzelt sind. Denn neben dem Versprödungsprozess setzt auch eine Materialschrumpfung ein, die dazu führt, dass es während der Versprödung zu einem Aufbrechen infolge der gegebenen bzw. auf die Abdrehung dann schrumpfungsbedingt einwirkenden mechanischen Kräfte kommt. Das heißt, dass durch Applikation der Mikrowellenstrahlung automatisch bereits eine Vereinzelung der Würste stattfindet, sodass eine separate Schneideinrichtung entfallen kann, da die Würste bereits vereinzelt vorliegen. Dieser Vereinzelungsprozess kann noch dadurch unterstützt werden, dass der Wurststrang leicht vorgespannt dem Mikrowellenapplikator zugeführt wird, das heißt, dass eine leichte Zugspannung auf die Abdrehungen wirkt, die dem Aufbrechen während des Behandlungs- und damit Versprödungsvorgangs zusätzlich zuträglich ist. Hierauf wird nachfolgend noch eingegangen.

Selbst für den Fall, dass es allein behandlungsbedingt noch nicht zu einem Aufbrechen der versprödeten Abdrehungen kommt, ist der Einsatz einer separaten Schneideinrichtung nicht erforderlich. Denn mit der erfindungsgemäßen Vorrichtung erfolgt eine derart starke Versprödung, dass bereits eine sehr geringe mechanische Belastung der Abdrehung ausreicht, damit diese bricht. Eine solche mechanische Einwirkung kann beispielsweise bereits dadurch zugefügt werden, dass die Würste beispielsweise am Ende der Fördereinrichtung auf ein Querförderband oder Ähnliches gegeben werden, mithin also zur Seite, nach oben oder nach unten abtransportiert werden, wobei es automatisch zum Aufbrechen kommt. Auch können die Würste von der Fördereinrichtung in einen Sammelbehälter und Ähnliches fallen, während des Fallens bricht wiederum die versprödete Abtrennung auf. Das heißt, dass grundsätzlich allein durch die Abgabe oder Übergabe von der den versprödeten Wurststrang transportierenden Fördereinrichtung auf eine andere Förder- oder Abtransport- oder Sammeleinheit eine mechanische Belastung auf die versprödeten Abdrehungen ausgeübt wird, die zum Aufbrechen desselben führt.

Die erfindungsgemäß erreichbare Versprödung ist aber selbst dann von beachtlichem Vorteil, wenn es zu keiner automatischen Vereinzelung kommt und eine nachgeschaltete Schneideinrichtung vorgesehen ist. Denn infolge der Versprödung ist das Durchschneiden der Abdrehungen wesentlich einfacher, da die Abdrehungen ihre Elastizität verloren haben und - selbst wenn unterschiedliche Abdrehungsdicken gegeben sein sollten - ein einfacherer Schnitt möglich ist, mithin also an die Leistungsfähigkeit der Schneideinrichtungen wesentlich geringere Anforderungen gestellt werden können. Im übrigen ist ein Aufdrehen der durchgeschnittenen Abdrehungen aufgrund der leichten "Verschweißung" des Hüllmaterials im Bereich der Abdrehung ausgeschlossen, was ein weiterer Vorteil der erfindungsgemäßen Vorgehensweise ist, verglichen zum bisher üblichen reinen Durchschneiden.

Die Applikation der Mikrowellenstrahlung auch auf die Wurst selbst führt ebenfalls zu einer leichten koagulationsbedingten oder vernetzungsbedingten Materialveränderung der Wursthülle und damit zu einer gewissen Versteifung, jedoch nicht vergleichbar mit der extremen Versprödung bis hin zum Bruch im Bereich der Abdrehung. Denn im Wurstbereich wird die eingekoppelte thermische Energie über das kalte Wurstbrät oder Wurstmasse abgeführt, sodass, bezogen auf die Wursthülle selbst, der dortige Energieeintrag deutlich geringer ist. Die leichte Versprödung der Wursthülle auch im Wurstbereich ist darüber hinaus sogar von Vorteil, als die Würste sich hierdurch insgesamt etwas versteifen und mithin ihre lang gestreckte, gerade Form, die sie infolge der Förderung auf der Fördereinrichtung besitzen, letztlich auch nach der Behandlung weitgehend beibehalten, was für die nachfolgende Prozessierung der Würste beispielsweise im Rahmen einer Weiterförderung oder einer Verpackung und Ähnlichem von Vorteil ist.

Insgesamt bietet also die erfindungsgemäße Vorrichtung unter Verwendung des rohrförmigen Mikrowellenapplikators mit einer gekoppelten Mikrowellenerzeugungseinrichtung den Vorteil, den Wurststrang derart zu behandeln, dass entweder die Würste nach der Behandlung bereits vereinzelt sind, oder dass sie durch Aufbringen einer sehr geringen Belastung auf die versprödeten Abdrehungen vereinzelt werden können. Eine Schneideinrichtung ist hierfür gerade nicht vorzusehen, da wie beschrieben der rohrförmige Mikrowellenapplikator einen derart hohen, konzentrierten Strahlungseintrag ermöglicht, dass es zu der extremen Versprödung kommt. Dieser hohe Energieeintrag ist auch dann ohne Weiteres möglich, wenn der Wurststrang mit hoher Geschwindigkeit mittels der Fördereinrichtung durch den rohrförmigen Mikrowellenapplikator hindurchgefördert wird, wobei je nach Wurstlänge mehrere Einhundert Würste pro Minute hindurchgefördert werden können. Sofern trotzdem eine Schneideinrichtung vorzusehen ist, kann diese einfacher ausgelegt werden bzw. der Schnitt einfacherer und sicherer durchgeführt werden.

Ein weiterer besonderer Vorteil der erfindungsgemäß ermöglichten vollkommenen Versprödung der Abdrehung besteht darin, dass die Abdrehung - sei es, dass sie unmittelbar nach dem Durchlaufen des Mikrowellenapplikators bereits aufgebrochen ist, sei es, dass sie erst durch die marginale "mechanische Nachbehandlung" während des Abtransports aufgebrochen wird - "komplett verschweißt" ist, das heißt, die Abdrehung ist koagulations- oder vernetzungsbedingt vollkommen geschlossen und geht nicht auf. Dies ist unabhängig vom jeweiligen Vereinzelungsvorgang der Fall, also sowohl beim "automatischen" Vereinzeln, dem Vereinzeln durch seitlichen Belastung der Abdrehungen oder dem separaten Schneiden. Dieses Verschweißen ist von besonderem Vorteil für die nachfolgende Behandlung, sei es das Abtransportieren und Verpacken, sei es beispielsweise ein nachfolgendes Brühen der Würste und Ähnliches. Denn infolge dieses sich durch die erfindungsgemäße Mikrowellenbehandlung und Abdrehungsversprödung ergebenden Wurstverschluss ist ausgeschlossen, dass Wurstbrät aus einem der Enden austritt.

Gemäß einer zweckmäßigen Weiterbildung ist der erfindungsgemäß vorgesehene Mikrowellenapplikator ein Monomode-Applikator. Ein solcher Monomode-Applikator bewirkt, dass sich im Applikator eine stehende Welle ausbildet, die sich diskret in der Kammer verteilt. Bei einem solchen Monomode-Applikator sind die Applikatorgeometrie und die Wellenlänge aufeinander abgestimmt. Die Wellenlänge liegt bevorzugt zwischen 5 - 20 cm, insbesondere zwischen 10 - 15 cm und vorzugsweise zwischen 11 - 13 cm, wobei in einer konkreten Realisierungsform der Erfindung eine Wellenlänge von 12,4 cm gewählt wird. Das heißt, die freie Wellenlänge im Applikator beträgt die jeweils gewählte Wellenlänge, im konkreten Ausführungsbeispiel die beschriebenen 12,4 cm. Auch die Geometrie des Applikators, also sein Durchmesser, ist darauf abgestimmt, liegt also in einem entsprechenden Bereich, sodass sich eine stehende Welle der beschriebenen Wellenlänge mit diskreter Verteilung innerhalb der Applikationskammer ausbildet. Die Leistung der Mikrowellenerzeugungseinrichtung sollte 1 - 50 kW, vorzugsweise 3 - 30 kW betragen.

Der besondere Vorteil der Verwendung eines solchen Monomode-Applikators besteht darin, dass die eine sich im Applikator ausbreitende Monomode-Welle die volle Magnetron-Leistung besitzt. Aufgrund der runden Form des Applikators, der wie beschrieben rohrförmig, also querschnittlich rund oder eckig, vorzugsweise rechteckig oder quadratisch, ausgeführt ist, in Verbindung mit den Applikatorabmessungen ergibt sich durch die anliegende stehende Welle sowie die Reflexion derselben im Applikator eine Konzentration der Mikrowellenleistung, die für die extrem schnelle Erwärmung besonders zweckdienlich ist.

Erfindungsgemäß kann ferner vorgesehen sein, dass der rohrförmige Mikrowellenapplikator eine radiale Öffnung zum Einspeisen der extern zum Mikrowellenapplikator erzeugten Mikrowellenstrahlung aufweist. Das heißt, dass der Mikrowellenapplikator ein längliches, allseitig geschlossenes Bauteil ist, das lediglich - abgesehen von den vorderen und hinteren Zuführöffnungen für den Wurststrang - eine weitere radiale Öffnung aufweist, über die die Mikrowellenstrahlung eingespeist wird. Die Mikrowellenstrahlung wird über die Erzeugungseinrichtung, umfassend das Magnetron nebst Generator und Steuerungseinrichtung und sonstiger erforderlicher Bauteile, extern zum Applikator erzeugt und über eine geeignete Strahlungszuführung, bevorzugt ein am Mikrowellenapplikator angesetztes Strahlungszuführungsrohr, in den Applikator eingespeist.

Gemäß einer besonders vorteilhaften Weiterbildung der Erfindung ist vorgesehen, dass der Mikrowellenapplikator ein Außengehäuse und ein in seinem Inneren angeordnetes, für Mikrowellen transparentes Innenrohr, durch das die Fördereinrichtung den Wurststrang fördert, aufweist. Der erfindungsgemäß verwendete Applikator ist also zweiteilig, bestehend aus einem Außenrohr bevorzugt aus Metall, über das der eigentliche Applikator respektive die Applikationskammer, in der die Mikrowellenstrahlung ansteht und reflektiert wird, ausbildet wird. Dieses Außengehäuse kann ohne Weiteres auch nur abschnittsweise in seinem Durchmesser entsprechend der konkret gewählten Strahlungswellenlänge ausgelegt werden, um den Applikator als Monomode-Applikator auszuführen. Im Inneren dieses Außengehäuses oder Außenrohres ist ein Innenrohr angeordnet, das für die Mikrowellenstrahlung transparent ist. "Strahlungstransparent" bedeutet in diesem Zusammenhang, dass das Rohrmaterial die eingekoppelte Mikrowellenstrahlung nur in einem äußerst geringen, quasi vernachlässigbaren Maß schwächt. Vollkommen strahlungstransparent kann ein Material letztlich nicht sein, das verwendete Material ist aber so gewählt, dass es zu einer quasi vernachlässigbaren Strahlungsabsorption über dieses Innenrohrmaterial kommt. Dieses Innenrohr ist in seinem Innendurchmesser letztlich auf den Durchmesser der zu fördernden Würste abgestellt. Da die Fördereinrichtung durch den Applikator und damit zwangsläufig durch das Innenrohr läuft, ist bei der Durchmesserauslegung auch die Dicke oder Stärke der Fördereinrichtung, beispielsweise durchlaufender Endlosförderbänder, zu berücksichtigen. Über das Innerohr wird einerseits die Form der Fördereinrichtung im Rohrbereich vorgegeben, also beispielsweise ein flexibles Förderband gekrümmt, sodass sich die Förderbandform der runden Wurstform anpasst. Darüber hinaus ist das Innenrohr, das aus dem Außengehäuse oder dem Außenrohr entnehmbar ist, auch zu Reinigungszwecken auf einfache Weise auszubauen und zu behandeln. Das heißt, dass im Rahmen einer Vorrichtungsreinigung nicht der gesamte Applikator zureinigen ist, sondern lediglich das Innenrohr, das als einziges mit dem Wurststrang in Berührung kommt.

Das Innenrohr ist wie beschrieben aus einem für Mikrowellenstrahlung transparentem Material. Als ein solches kann beispielsweise Polytetraflourethylen (PTFE), Polypropylen (PP) oder Polyethylen (PE) verwendet werden, wobei diese Aufzählung nicht abschließend ist.

Zweckmäßig ist es ferner, wenn die Wanddicke des Innenrohrs wenigstens im Bereich der Applikation der Mikrowellenstrahlung geringer ist als im übrigen Rohrbereich. Das heißt, dass - bei natürlich konstantem Innendurchmesser - das Innenrohr im Bereich der Mikrowellenapplikation eine geringere Wandstärke aufweist als im vorderen und hinteren Rohrbereich. Hierüber kann der ohnehin aufgrund der Verwendung des strahlungstransparenten Materials äußerst geringe Absorptionsgrad der Mikrowellenstrahlung über das Rohrmaterial noch weiter reduziert werden, sodass er letztlich vernachlässigbar ist.

Wie beschrieben wird der Wurststrang mittels einer Fördereinrichtung durch den rohrförmigen Mikrowellenapplikator hindurch gefördert. Hierbei sind grundsätzlich zwei unterschiedliche Ausgestaltungen denkbar. Nach einer ersten, besonders bevorzugten Erfindungsausgestaltung erstreckt sich die Fördereinrichtung vollständig durch den Mikrowellenapplikator. Das heißt, die Fördereinrichtung, umfassend bevorzugt zwei einander gegenüberliegend angeordnete Endlosförderbänder, übernimmt den Wurststrang von einer Zuführvorrichtung am Eingang der Behandlungsvorrichtung. Sie läuft in, durch und aus dem Applikator zum Ende der Behandlungsvorrichtung. Das heißt, dass der Wurststrang auf einer einzige Fördereinrichtung komplett durch die Behandlungsvorrichtung und durch den Applikator transportiert wird.

Eine alternative Erfindungsausgestaltung sieht vor, dass die Fördereinrichtung einen in den Mikrowellenapplikator führenden ersten Förderabschnitt und einen aus dem Mikrowellenapplikator führenden zweiten Förderabschnitt aufweist, die im Inneren des Mikrowellenapplikator im Bereich der Applikation der Mikrowellenstrahlung, eine Übergabe einer Wurst vom einen Abschnitt auf den anderen ermöglichend, voneinander beabstandet sind. Bei dieser Erfindungsausgestaltung kommen also zwei separate Förderabschnitte zum Einsatz, die beispielsweise jeweils ebenfalls mittels jeweils zweier übereinander liegender Endlosförderbänder gebildet sein können. Der eine Förderabschnitt, also das eine Förderbandpaar, läuft an der Einlaufseite der Behandlungsvorrichtung, den Wurststrang übernehmen, in den Applikator ein und endet im Bereich der Applikationskammer. Der andere Förderabschnitt, umfassend beispielsweise ebenfalls ein Förderbandpaar, erstreckt sich im Bereich der Applikationskammer beginnend aus dem Applikator zum Ende der Behandlungsvorrichtung. Beide Förderabschnitte sind im Bereich der Applikationskammer etwas voneinander beabstandet, wobei der Abstand so gewählt ist, dass eine Wurst stets übergeben werden kann. Der Bereich der eigentlichen Strahlungsapplikation liegt bevorzugt weitestgehend frei, das heißt, dass sich hier kein Förderabschnitt befindet.

Auch hinsichtlich der Ausgestaltung der Fördereinrichtung ist es von besonderem Vorteil, wenn diese aus einem für die Mikrowellenstrahlung transparentem Material besteht. Das heißt, dass auch zur Bildung der Fördereinrichtung, beispielsweise der Förderbänder, ein Material verwendet wird, das für die Mikrowellen strahlungstransparent ist. Auch hier bedeutet der Begriff "strahlungstransparent", dass das Material eine äußerst geringe Strahlungsabsorption aufweist, die in einer quasi vernachlässigbaren Größenordnung liegt. Als ein solches Material kann wiederum z. B. Polytetraflourethylen (PTFE), Polypropylen (PP) oder Polyethylen (PE) verwendet werden.

Gemäß einer weiteren zweckmäßigen Erfindungsausgestaltung besteht die Fördereinrichtung oder jeder Förderabschnitt aus einem den Wurststrang oder die Würste tragenden Förderband oder aus zwei übereinander angeordneten, den Wurststrang oder die Würste zwischen sich aufnehmenden Förderbändern, die endlos umlaufen. Solche Endlosförderbänder sind einfach ausgeführt und ermöglichen einen sicheren Transport, sie sind lediglich über entsprechende Umlenkrollen respektive Stützrollen zu führen. Kommt nur ein Förderband, also kein übereinander liegendes Förderbandpaar zum Einsatz, so ist eine sichere Fixierung der Würste im Applikator gewährleistet, da bei querschnittlich rundem Applikator sich das Förderband der Rohrform entsprechend rundlich biegt und die Würste umgreift und fixiert. Dies ist für eine sichere Förderung ausreichend. Da ein solches einzelnes Band vorzugsweise etwas breiter gewählt wird, verglichen zu einem Bandpaar, ist auch außerhalb des Applikators eine sichere Förderung gewährleistet. Kommt ein Bandpaar zum Einsatz, werden die Würste zwischen beiden übereinander liegenden Bändern, die sich bei rundem Applikator beide wölben, sicher fixiert. Gleichermaßen sicher ist die Förderung aber auch bei einem eckigen Applikatorrohr bzw. Innenrohr, sowohl bei Verwendung eines einzelnen Bandes oder Bandpaaren, wenn sich die Bänder also nicht verformen.

Als Förderband oder Förderbänder können z.B. beschichtete Gewebebänder und modifizierte Kunststoffgliederbänder aus Polypropylen oder Polyester verwendet werden.

Kommt eine Fördereinrichtung zum Einsatz, die sich vollständig durch den Applikator respektive das Innenrohr erstreckt, so ist diese sowohl mit dem Obertrum als auch dem Untertrum, also dem innen liegenden, den Wurststrang fördernden Abschnitt wie auch dem außen liegenden, in die entgegengesetzte Richtung zurücklaufenden Abschnitt, durch das Innenrohr geführt. Dies ermöglicht es, zu Reinigungszwecken auf einfache Weise die beiden Förderbänder aus dem Innenrohr zu ziehen, da sie sich eben vollständig im Innenrohr befinden und nicht mit einem Abschnitt außen herum um den Applikator verlaufen. Zwar wäre eine solche Ausgestaltung grundsätzlich denkbar, jedoch wäre dann eine Stelle vorzusehen, an der das jeweilige Band geöffnet werden kann. Grundsätzlich besteht natürlich die Möglichkeit, anstelle solcher Endlosbänder auch eine Endlos-Gliederkette und Ähnliches einzusetzen.

Ein einfaches Entnehmen des oder der Förderbänder ist insbesondere dann möglich, wenn der Mikrowellenapplikator über seine ganze Länge oder lokal aufklappbar ist, d.h. dass sowohl Außengehäuse als auch Innenrohr, sofern dieser zweiteilige Aufbau vorgesehen ist, um eine parallel zur Applikatorlängsachse liegende Schwenkachse aufgeschwenkt werden können. Aus dem offenen Applikator können die Förderbänder einfach entnommen und in diesen ebenso einfach wieder eingesetzt werden. Auch eine Reinigung des Applikators ist dann sehr einfach, das Innenrohr, sofern vorgesehen, ist dann nicht mehr zu entnehmen, sondern kann eingebaut gereinigt werden.

Wie bereits beschrieben ist es besonders zweckmäßig, wenn der Wurststrang, wenn er durch den Applikator geführt wird, längs gestreckt ist, sodass die Abdrehungen in Stranglängsrichtung leicht gespannt sind. Eine solche Längsspannung kann dadurch erzeugt werden, dass die Fördereinrichtung, die den Wurststrang durch den Applikator führt, etwas schneller läuft als eine ihr vorgeschaltete Fördereinrichtung. Die erfindungsgemäße Behandlungsvorrichtung kann nun eine solche zweite, den Wurststrang der ersten, ihn durch den Applikator fördernden Fördereinrichtung vorgeschaltete Fördereinrichtung aufweisen, beispielsweise ein kurzes Förderbandpaar, das den Wurststrang von einer vorgeschalteten Herstellungsmaschine, beispielsweise einer Füllmaschine, übernimmt. Die Transportgeschwindigkeit der zweiten Fördereinrichtung entspricht der Anfördergeschwindigkeit, während die erste Fördereinrichtung etwas schneller läuft als die ihr vorgeschaltete zweite Fördereinrichtung, sodass es zu der Längsstreckung des Wurststrangs und damit der Längsspannung der Abdrehungen kommt. Werden nun die längs gespannten Abdrehungen erfindungsgemäß behandelt und vollständig infolge des Energieeintrags versprödet, so ziehen sie sich zwangsläufig etwas zusammen. Die geringe Längsspannung ist bereits ausreichend, dass es zu einem Aufbrechen der versprödeten Abtrennungen bereits im Applikator kommt, sodass im Applikator bereits die Vereinzelung der Würste stattfindet.

Besteht die Fördereinrichtung jedoch auch zwei Förderabschnitten, wie zuvor beschrieben, wobei der eine in den Applikator und der aus dem Applikator fördert, so kann die Längsspannung natürlich ohne Weiteres dadurch erzeugt werden, dass die abfördernde Fördereinrichtung etwas schneller als die anfördernde läuft. Das heißt, dass in diesem Fall letztlich der Spannungsaufbau im Applikator im Bereich der Wurstübergabe von dem ersten auf den zweiten Förderabschnitt erfolgt, was aber hinreichend ist, da der Spannungsaufbau letztlich simultan mit der Versprödung geht und infolgedessen es geschwindigkeitsunterschiedsbedingt zum Abreißen der versprödeten Abdrehung kommt.

Neben der erfindungsgemäßen Vorrichtung betrifft die Erfindung ferner ein Verfahren zum Behandeln eines Wurststrangs, bestehend aus hintereinander angeordneten Würsten mit einer Wursthülle aus einem organischen Material, die im Bereich zwischen zwei Würsten eine Abdrehung aufweist. Dieses Verfahren kann insbesondere mit einer Vorrichtung der beschriebenen Art durchgeführt werden. Das Verfahren zeichnet sich erfindungsgemäß dadurch aus, dass der Wurststrang zumindest im Bereich der Abdrehungen in einen Mikrowellenapplikator mit Mikrowellen, die dem Mikrowellenapplikator von einer extern zu diesem angeordneten Mikrowellenerzeugungseinrichtung zugeführt werden, beaufschlagt werden, wobei die Abdrehung durch Zug in Stranglängsrichtung gespannt ist.

Das erfindungsgemäße Verfahren zeichnet sich also einerseits dadurch aus, dass über den Mikrowellenapplikator Mikrowellen auf den Wurststrang und insbesondere die Abdrehungen appliziert wird, die zu einer Versprödung des organischen Hüllenmaterials, also des Natur- oder Kunstdarms führt, insbesondere im Abdrehungsbereich, derart, dass die Abdrehungen vollständig durchwärmen und es über den gesamten Querschnitt zu der Materialveränderung, also dem Koagulations- oder Vernutzungseffekt verbunden mit der vollständigen Versprödung über den gesamten Abdrehungsquerschnitt, kommt. Weiter sieht das erfindungsgemäße Verfahren nun vor, dass jede derart behandelte Abdrehung während der Behandlung, also der Mikrowellenerwärmung, leicht unter Zug steht, mithin also in Stranglängsrichtung gestreckt ist. Wie bereits einleitend beschrieben, kommt es im Rahmen dieser thermischen Behandlung und der daraus resultierenden Materialveränderung auch zu einer gewissen Materialschrumpfung bzw. einem Zusammenziehen des Materials, resultierend aus der Versprödung. Steht nun die Abdrehung unter leichter Zugspannung, so führt allein diese geringe Zugspannung dazu, dass es ab einem gewissen Versprödungsgrad automatisch zu einem Aufbrechen der versprödeten Abdrehung kommt. Das heißt, dass unmittelbar mit der Mikrowellenbehandlung auch die Vereinzelung der Würste einhergeht, da die versprödeten Abdrehungen noch im Inneren des Applikators aufbrechen.

Die Spannung kann gemäß einer besonders vorteilhaften Weiterbildung der Erfindung dadurch erzeugt werden, dass eine den Wurststrang durch den Mikrowellenapplikator fördernde Fördereinrichtung schneller fördert als eine dieser vorgeschaltete, den Wurstrang zuführende Fördereinrichtung. Das heißt, dass die Fördereinrichtung der verwendeten Behandlungsvorrichtung - sei es eine "einteilige" Fördereinrichtung, sei es eine "zweiteilige" Fördereinrichtung mit zwei separaten Abschnitten - etwas schneller läuft als die den Wurststrang zuführende Fördereinrichtung, die beispielsweise von einer Füllmaschine kommt und dieser zugeordnet ist. Hierzu kommt es förderungsgeschwindigkeitsbedingt zu einem Ziehen des Wurststrangs in Stranglängsrichtung und daraus resultierend zu einer Spannung der jeweiligen Abdrehungen. Die Fördergeschwindigkeitsdifferenz sollte 1 - 5 % betragen.

Anstelle der Ausbildung des Geschwindigkeitsunterschieds zwischen der der Behandlungsvorrichtung zugehörigen Fördereinrichtung, durch die der Wurststrang durch den Applikator gefördert wird, und einer ihr vorgeschalteten, einer andere Strangherstellungsvorrichtung zugeordneten Fördereinrichtung ist es natürlich auch denkbar, dass die Behandlungsvorrichtung selbst zwei Fördereinrichtungen aufweist, über die die Geschwindigkeitsdifferenz, die die Längsspannung erwirkt, ausgebildet respektive eingestellt ist. Diese zweite Fördereinrichtung kann ein relativ kurzes Übernahmeförderbandpaar sein, das den Wurststrang von einer vorgeschalteten Herstellungsmaschine übernimmt. Besteht die Fördereinrichtung selbst aus zwei Förderabschnitten, so können diese unterschiedlich schnell Fördern, wodurch die Zugspannung aufgebaut werden kann.

Weitere Vorteile, Merkmale und Einzelheiten der Erfindung ergeben sich aus den im Folgenden beschriebenen Ausführungsbeispielen sowie anhand der Zeichnung. Dabei zeigen:
- Fig. 1: eine Prinzipdarstellung einer erfindungsgemäßen Vorrichtung,
- Fig. 2: eine Detailansicht der Vorrichtung aus Fig. 1 in einer Schnittansicht,
- Fig. 3: die Vorrichtung aus Fig. 1 mit einer zusätzlichen vorgeschalteten Fördereinrichtung, und
- Fig. 4: eine weitere Ausgestaltung der Vorrichtung in einer Schnittansicht durch den Applikator mit einer Fördereinrichtung, umfassend einen ersten und einen zweiten Förderabschnitt.

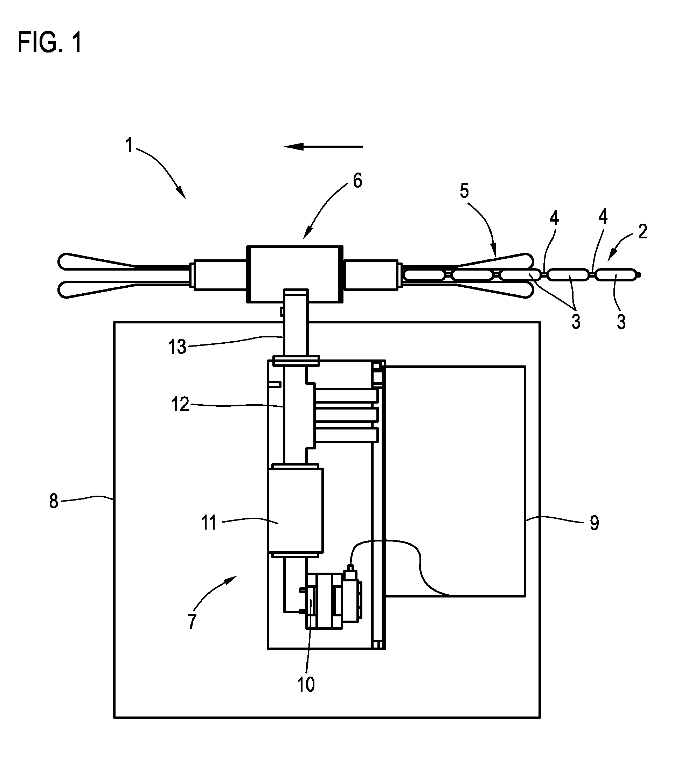

Fig. 1 zeigt eine erfindungsgemäße Vorrichtung 1 zum Behandeln eines Wurststrangs 2, bestehend aus hintereinander angeordneten Würsten 3, die jeweils über eine Abdrehung 4 miteinander verbunden in einer Wursthülle aufgenommen sind. Der Wurststrang 2 wird mittels einer Fördereinrichtung 5 längs der Vorrichtung 1 gefördert und durch einen Mikrowellenapplikator 6, der als Monomode-Applikator ausgeführt ist, hindurchgeführt. Der Pfeil gibt in jeder Figur die Förderrichtung an. Die Fördereinrichtung 1 erstreckt sich durch den gesamten Mikrowellenapplikator 6, läuft also in diesen hinein und wieder hinaus. Im Inneren des Applikators wird der Wurststrang 2 mit Mikrowellen beaufschlagt, was zu einer Versprödung der Abdrehungen 4 und im Regelfall gleichzeitig zu einem Aufbrechen der versprödeten Abdrehungen 4 führt, sodass letztlich bereits vereinzelte Würste 3 aus dem Applikator 6 herausgefördert werden.

Der Applikator 6 ist mit einer Mikrowellenerzeugungseinrichtung 7 verbunden, die extern zum Applikator 6 angeordnet ist und sich in einem Vorrichtungsgehäuse 8 befindet. Die Mikrowellenerzeugungseinrichtung 7 besteht aus einer Hochspannungsversorgung 9, einem wassergekühlten Magnetron 10, einem Isolator 11, an dessen Wasserlast die Reflexion gemessen wird, einer Drei-Stiftabstimmeinheit 12 und einem Verbindungsrohr 13, über das die Mikrowellenerzeugungseinrichtung 7 mit dem Applikator 6 zum Einspeisen der erzeugten Mikrowellenstrahlung in den Applikator 6 gekoppelt ist. Die Wellenlänge der Mikrowellenstrahlung liegt im Bereich mehrerer Zentimeter, vorzugsweise im Bereich zwischen 10 - 15 cm. Sie wird so gewählt wie auch der Mikrowellenapplikator 6 so ausgelegt wird, dass sich im Mikrowellenapplikator 6 eine freie Wellenlänge von ca. 12 cm, in einem konkreten Ausführungsbeispiel beispielsweise 12, 4 cm, ausbildet, sodass sich in dem Monomode-Applikator eine stehende Welle mit einer diskreten Verteilung ausbildet. Die Mikrowellenerzeugungseinrichtung 7 kann mit verschiedenen Frequenzen betrieben werden. Eine bevorzugte Frequenz liegt bei 2,45 GHz. Die Bemaßung des Applikators 6 und damit auch die konkrete Wellenlänge kann sich nach der Dicke der zu behandelnden Würste richten. Sehr dicke Würste, die durch den Applikator laufen, bedürfen unter Umständen eines etwas größeren Applikators und einer etwas anderen Wellenlänge als dünne Würste.

Im Monomode-Mikrowellenapplikator 6 herrscht eine hohe Feldstärke, die ursächlich für die trotz hoher Fördergeschwindigkeit des Wurststrangs erfolgende vollständige Versprödung der Abdrehungen 4 ist. Diese hohe Feldstärke respektive hohe Leistungsdichte wird aufgrund des Einsatzes eines Monomode-Applikators ermöglicht. Infolge seiner Verwendung bildet sich im Applikator 6 lediglich eine stehende Welle aus, die nahezu die gesamte Leistung des Magnetrons 10 besitzt. Der Mikrowellenapplikator 6 ist als querschnittlich rundes Rohr ausgeführt, worauf nachfolgend noch eingegangen wird, sodass es auch formbedingt zu einer Konzentration der Strahlung in seinem Inneren kommt. Hierdurch kann ein sehr schneller, sehr hoher Energieeintrag in den zu behandelnden Wurststrang erreicht werden.

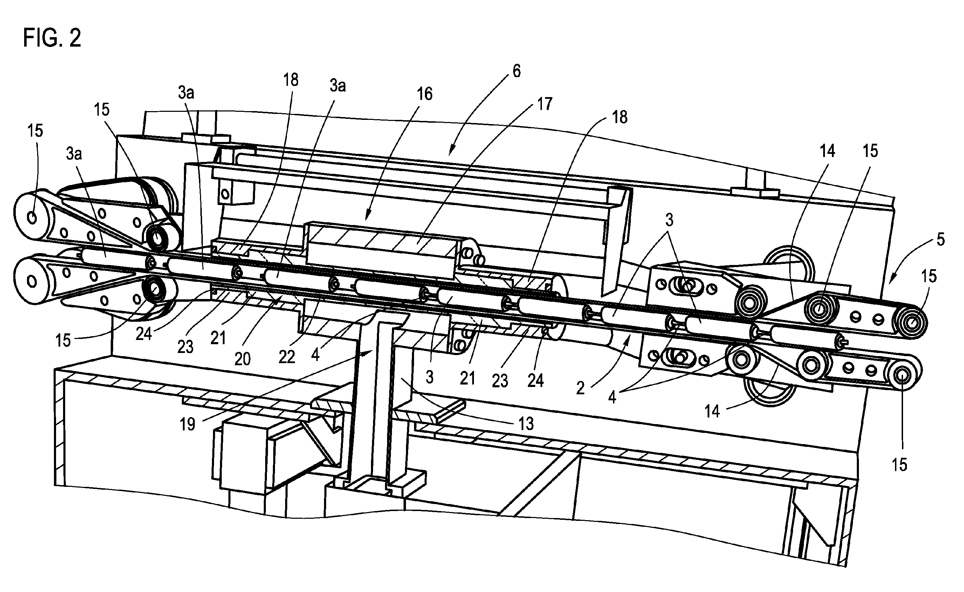

Fig. 2 zeigt eine Detailansicht der erfindungsgemäßen Vorrichtung 1 in einer Schnittdarstellung im Bereich des Mikrowellenapplikators 6. Gezeigt ist zum einen die Fördereinrichtung 5, die aus zwei übereinander verlaufenden Endlos-Förderbändern 14 besteht, die jeweils insgesamt mit ihrem fördernden und zurückgeführten Bandabschnitt durch den Mikrowellenapplikator 6 geführt sind.
Die beiden Förderbänder 14 bestehen aus einem für die applizierte Mikrowellenstrahlung transparenten Material, beispielsweise PTFE, PP oder PE. Sie sind über diverse Umlenkrollen 15 einlauf- und auslaufseitig geführt, wobei wenigstens eine dieser Rollen angetrieben wird.

Der Mikrowellenapplikator 6 selbst ist rohrförmig ausgeführt, das heißt, er besitzt eine lange, hohlzylindrische Struktur bzw. Form. Er besteht aus einem Außengehäuse 16, vorzugsweise aus Metall, das einen ersten, einen größeren Durchmesser aufweisenden Abschnitt 17 aufweist, sowie diesem vor- und nachgeordnete, im Durchmesser kleinere Abschnitte 18. Die Abschnitte 17 und 18 könne auch mittels separater Rohrstücke gebildet sein, die miteinander - nicht zuletzt für eine einfache Reinigung - lösbar verbunden sind.

Der Mikrowellenapplikator 16 weist in seinem mittleren Abschnitt 17 eine radiale Öffnung 19 auf, im Bereich welcher das Verbindungsrohr 13 mündet, über das die seitens der Mikrowellenerzeugungseinrichtung 7 erzeugte Mikrowelllenstrahlung in den Applikator 6 eingebracht wird.

Im Inneren des Außengehäuses 6 befindet sich ein Innenrohr 20, das sich über die wesentliche Länge des Außengehäuses 16 erstreckt. Die vorderen und hinteren Endabschnitte 21 des Innenrohrs 20 weisen dabei eine größere Dicke auf als der mittleren Abschnitt 22, der zwar den gleichen Innendurchmesser wie die Abschnitte 21 aufweist, jedoch radial gesehen dünner ist. Der Außendurchmesser der Abschnitte 21 entspricht dem Innendurchmesser des Außengehäuses 16 in seinen Abschnitten 18, sodass sich dort eine quasi formschlüssige Aufnahme ergibt. Stirnseitig sind lösbare Anschläge 23 in das Außengehäuse 16 eingebracht, die über geeignete Fixierringe 24 gehaltert sind und so das Innenrohr 20 im Außengehäuse 16 fixieren.

Ersichtlich laufen die beiden Endlosbänder 14 durch das Innenrohr 20. Die Endlosbänder bestehen aus einem flexiblen Material, z.B. in Form von beschichteten Gewebebändern, sodass sie sich der Form des Innenrohrs 20 anpassen können, mithin also gebogen werden. An dieser Stelle sei darauf verwiesen, dass das Innenrohr 20 auch rechteckigen Querschnitts sein kann. In diesem Fall würden die Endlosbänder nicht verformt, so dass z.B. auch Kunststoffgliederbänder verwendet werden können.

Sowohl das Innenrohr 20 als auch die Fördereinrichtung 5 bzw. deren Endlosbänder 14 bestehen aus einem für die applizierte Mikrowellenstrahlung transparenten Material, beispielsweise PTFE, PP oder PE. Das heißt, dass die über das Zuführrohr 13 applizierte Mikrowellenstrahlung nahezu ungeschwächt auf den Wurststrang einwirken kann.

Wird Mikrowellenstrahlung zugeführt, so bildet sich, da der Mikrowellenapplikator 6 als Monomode-Applikator ausgeführt ist, im Inneren des mittigen Applikatorabschnitts, definiert über den querschnittlich gesehen größeren Bereich im Abschnitt 17, eine stehende Welle aus. Aufgrund dieser Ausgestaltung als Monomode-Applikator, auch in Verbindung mit seiner querschnittlich runden Form kommt es zu einer hohen Energie- oder Leistungskonzentration im Inneren des mittleren Bereichs, also im Bereich des Abschnitts 17 des Außengehäuses, durch welchen Bereich der Wurststrang gefördert wird, wo also die Mikrowellenstrahlung appliziert wird. Fig. 2 zeigt den Wurststrang 2 mit seinen einzelnen Würsten 3 und den Abdrehungen 4. Die Mikrowellenstrahlung bewirkt, wie zuvor beschrieben, eine Materialveränderung des organischen Materials, es kommt zu einer Versprödung sowohl der Wursthülle im Bereich der einzelnen Würste 3 selbst, was von Vorteil ist, als die einzelne Wurst sich leicht versteift. Insbesondere aber kommt es zu einer Versprödung im Bereich der behandelten Abdrehung 4. Diese Versprödung geht soweit, dass es zu einem automatischen Aufbrechen der versprödeten Abtrennung 4 im Inneren des Mikrowellenapplikators 6 kommt, wie in Fig. 2 gezeigt ist. Denn die bereits behandelten Würste 3a sind nicht mehr über Abdrehungen miteinander verbunden. Das heißt, dass bereits im rohrförmigen Mikrowellenapplikator 6 die Wurstvereinzelung erfolgt, allein hervorgerufen durch die Mikrowellenbehandlung.

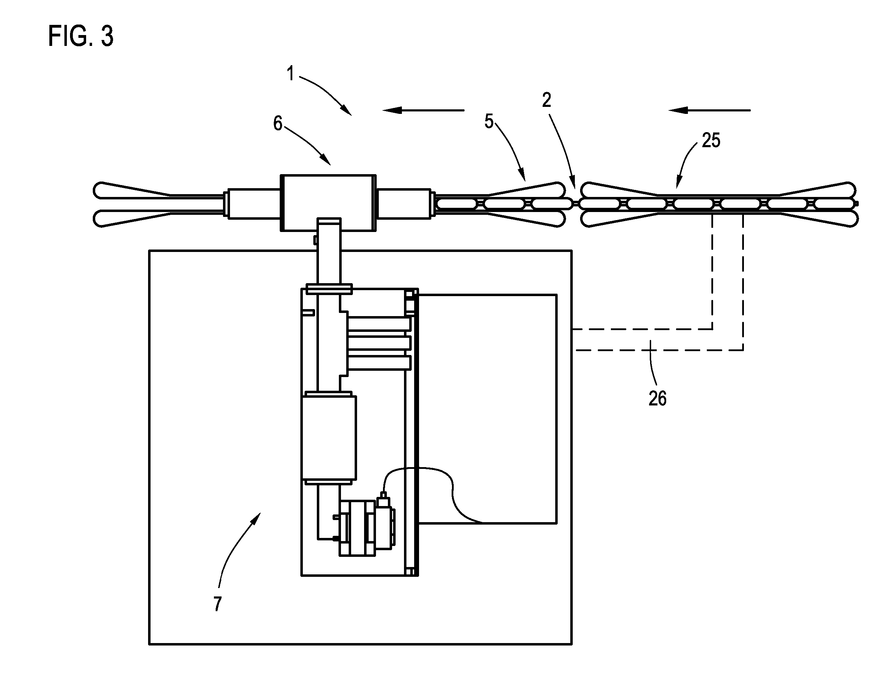

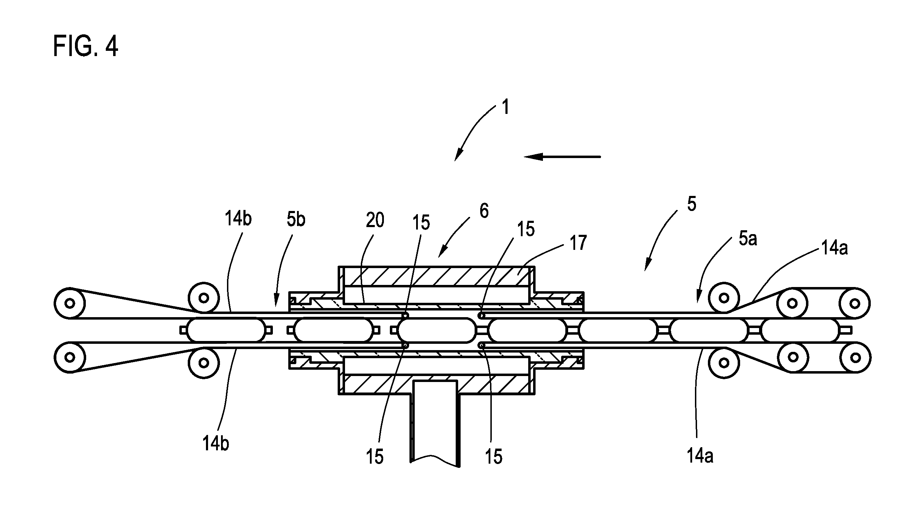

Dieses Aufbrechen der versprödeten Abdrehungen im Mikrowellenapplikator 6 kann auch dadurch unterstützt werden, dass der einlaufende Wurststrang 2 leicht längs gestreckt wird, sodass die Abdrehungen 4 unter leichter Zugspannung stehen. Dies kann, worauf nachfolgend in Bezug auf die Fig. 3 und 4 noch eingegangen wird, z. B. dadurch erfolgen, dass der Strang aufgrund unterschiedlicher Fördergeschwindigkeiten einzelner Fördereinrichtungen in die Länge gezogen wird.

Sollte aus irgendwelchen Gründen die im Mikrowellenapplikator 6 vorgenommene thermische Mikrowellenbehandlung nicht dazu führen, dass es bereits im Mikrowellenapplikator 6 selbst zu einem Aufbrechen der Abdrehungen 4 kommt, so brechen diese automatisch und ohne Einsatz einer irgendwie gearteten Schneideinrichtung allein dadurch auf, dass die einzelnen Würste 3, die über versprödete Abdrehungen 4 noch verbunden sind, in irgendeiner Weise eine Querbelastung erfahren, beispielsweise durch eine der Fördereinrichtung 5 nachgeschaltete weitere Fördereinrichtung, die beispielsweise zur Seite hin abtransportiert, oder eine sonstige Übernahme- oder Übergabevorrichtung, die die Würste unter Aufbringung einer äußerst geringen mechanischen Belastung auf die versprödeten Abtrennungen 4 übernimmt.

Fig. 3 zeigt eine erfindungsgemäße Vorrichtung 1, deren Aufbau der Vorrichtung 1 aus Fig. 1 und 2 entspricht. Auch hier ist also eine Mikrowellenerzeugungseinrichtung 7, ein Monomode-Mikrowellenapplikator 6 und eine Fördereinrichtung 5 vorgesehen, die den Wurststrang 2 durch den Mikrowellenapplikator 6 fördert.

Um nun die zuvor beschriebene, leichte Zugspannung in Stranglängsrichtung zu erzeugen ist der Fördereinrichtung 5 eine weitere Fördereinrichtung 25 vorgeschaltet, die entweder Teil der Vorrichtung 1 selbst sein kann, wie durch den gestrichelt gezeigten Träger 6 angedeutet. Die weitere Fördereinrichtung 25 kann aber auch Teil einer vorgeschalteten Herstellvorrichtung sein, beispielsweise einer Füllmaschine oder Ähnlichem.

In jedem Fall ist die Fördergeschwindigkeit der vorrichtungsseitigen Fördereinrichtung 5 etwas größer als die Fördergeschwindigkeit der vorgeschalteten weiteren Fördereinrichtung 25. Das heißt, dass im Bereich der Strangübergabe infolge der höheren Fördergeschwindigkeit der Fördereinrichtung 5 der Wurststrang automatisch etwas in die Länge gezogen wird, worüber auch die Abdrehungen 4 gelängt und damit leicht gespannt werden. Die Geschwindigkeitsdifferenz muss nicht groß sein, eine Differenz im Bereich von 1 - 5 % ist ausreichend.

Fig. 4 zeigt eine weitere erfindungsgemäße Ausgestaltung einer Vorrichtung 1, wobei hier nur der wesentliche Teil, nämlich der Mikrowellenapplikator 6 wie auch die Fördereinrichtung 5 detailliert und im Schnitt gezeigt sind. Die Vorrichtung 1 gemäß Fig. 4 unterscheidet sich von der Vorrichtung 1 gemäß der Fig. 1 - 3 dadurch, dass die Fördereinrichtung 25 aus zwei separaten Förderabschnitten 5a und 5b besteht. Jeder Förderabschnitt 5a, 5b, besteht aus zwei Endlos-Förderbändern 14a, 14b. Im Unterschied zur zuvor beschriebenen Ausgestaltung erstreckt sich die Fördereinrichtung 5 insgesamt jedoch nicht einteilig durch den Mikrowellenapplikator 6, vielmehr erstreckt sich der erste Förderabschnitt 5a bis in den Bereich des mittleren Abschnitts 17 des Mikrowellenapplikators 6, wo also die Applikation der Mikrowellenstrahlung erfolgt. Dort werden die beiden Förderbänder 14a umgelenkt und wieder herausgeführt. Hierzu sind im Innenrohr 20, das gegebenenfalls in der Mitte getrennt ist und folglich aus zwei mittig aneinander stoßenden Rohrabschnitten besteht, ebenfalls entsprechende Umlenkrollen 15 vorgesehen.

Beabstandet zum Ende der ersten Förderbänder 14a beginnen die beiden Förderbänder 14b des zweiten Förderabschnitts. Diese führen aus dem Mikrowellenapplikator 6 heraus. Im Applikatorinneren sind ebenfalls entsprechende Umlenkrollen 15 aus strahlentransparentem Material vorgesehen, über die die beiden Förderbänder 14b geführt sind.

Wie Fig. 4 zeigt sind die Förderbänder 14a und 14b im mittigen Applikatorbereich voneinander beabstandet. Der Abstand ist so bemessen, dass die einzelnen Würste ohne Weiteres übergeben werden können und immer von einem Förderbandpaar gegriffen sind. In dem zentralen Bereich, in dem die Mikrowellenstrahlung appliziert wird, liegen folglich die Würste 3 wie auch die Abdrehungen 4 frei.

Ersichtlich kann nun - soll eine leichte Zugspannung erzeugt werden, was nicht zwingend ist - der zweite Förderbandabschnitt 5b etwas schneller fördern als der erste Förderabschnitt 5a, was dazu führt, dass im Bereich der Wurstübergabe, also im Applikatorinneren, die Zugspannung aufgebaut wird, die die Abdrehungen 4 streckt. Werden diese nun mit der Mikrowellenstrahlung behandelt, so verspröden sie, gleichzeitig werden sie gestreckt. Hierdurch kommt es wiederum zwangsläufig im Applikatorinneren automatisch zum Aufbrechen der versprödeten Abdrehungen 4 und damit zur Wurstvereinzelung.

Für sämtliche beschriebenen Ausführungsformen gilt, dass das Innenrohr 20 ohne Weiteres aus dem Außengehäuse 16 entfernt werden kann, wenn die Vorrichtung zu reinigen ist. Bei der Ausgestaltung gemäß der Fig. 1 - 3 können aus dem einteiligen Innenrohr 20 die Förderbänder 14, nachdem sie von den Umlenkrollen 15 abgenommen sind, ohne Weiteres herausgezogen und selbst gereinigt werden. Alterbativ oder zusätzlich besteht auch die Möglichkeit, den Applikator über seine Länge aufklappbar auszuführen, mithin also sowohl das Außengehäuse als auch das Innenrohr quasi jeweils aus zwei Hälften auszubilden und beide um eine gemeinsame parallel zur Applikatorlängsachse verlaufende Schwenkachse aufklappbar zu gestalten. Zum Öffnen wäre also nur der schwenkbare Applikatorteil aufzuklappen, die Förderbänder können dann auf einfache Weise entnommen oder eingesetzt werden, wie auch das Innenrohr einfach gereinigt werden kann.

Bei der Ausführungsform gemäß Fig. 4 können die Förderbänder 14a und 14b ebenfalls ohne Weiteres entnommen werden, insbesondere wenn das Innerohr 20 zweiteilig ist. Es kann dann mittig getrennt werden, sodass auch dort die Förderbänder 14a und 14b von den entsprechenden Umlenkrollen 15 genommen respektive auch die Umlenkrollen aus dem Innenrohr 20 entnommen werden können.

Schließlich kann anstelle eines oder der mehreren Förderbandpaare, die die Würste zwischen sich aufnehmen, auch nur jeweils ein einzelnes, die Würste tragendes Förderband verwendet werden, das sich gleichermaßen wie in den Beispielen beschrieben beim Einlaufen in den Applikator verformt und um die Würste legt.

## Patentansprüche

1. Vorrichtung zum Behandeln eines Wurststrangs bestehend aus mehreren hintereinander angeordneten Würsten mit einer Wursthülle aus einem organischen Material, die im Bereich zwischen zwei Würsten eine Abdrehung aufweist, umfassend eine Fördereinrichtung (5) zum Transportieren des Wurststrangs (2) **durch** einen rohrförmigen Mikrowellenapplikator (6), der mit einer Mikrowellenerzeugungseinrichtung (7) zum Erzeugen von dem Mikrowellenapplikator (6) zuzuführender Mikrowellenstrahlung verbunden ist, **dadurch gekennzeichnet, dass** die Abdrehungen durch Zug in Stranglängsrichtung gespannt sind.

2. Vorrichtung nach Anspruch 1, **dadurch gekennzeichnet, dass** der Mikrowellenapplikator (6) ein Monomode-Applikator ist.

3. Vorrichtung nach Anspruch 1 oder 2, **dadurch gekennzeichnet, dass** der rohrförmige Mikrowellenapplikator (6) eine radiale Öffnung (19) zum Einspeisen der extern zum Mikrowellenapplikator (6) erzeugten Mikrowellenstrahlung aufweist.

4. Vorrichtung nach einem der vorangehenden Ansprüche, **dadurch gekennzeichnet, dass** der Mikrowellenapplikator (6) ein Außengehäuse (16) und ein in seinem Inneren angeordnetes, für Mikrowellen transparentes Innenrohr (20), durch das die Fördereinrichtung (5) den Wurststrang (2) fördert, aufweist.

5. Vorrichtung nach Anspruch 4, **dadurch gekennzeichnet, dass** das Innenrohr (20) aus Polytetraflourethylen, Polypropylen oder Polyethylen ist.

6. Vorrichtung nach Anspruch 4 oder 5, **dadurch gekennzeichnet, dass** die Wanddicke des Innenrohrs (20) wenigstens im Bereich der Applikation der Mikrowellenstrahlung geringer ist als im übrige Rohrbereich.

7. Vorrichtung nach einem der vorangehenden Ansprüche, **dadurch gekennzeichnet, dass** der Mikrowellenapplikator (6), insbesondere das Außengehäuse (16) und das Innenrohr (20), längs einer Schwenkachse über die Länge oder lokal aufklappbar ist.

8. Vorrichtung nach einem der vorangehenden Ansprüche, **dadurch gekennzeichnet, dass** sich die Fördeeinrichtung (5) vollständig durch den Mikrowellenapplikator (6) erstreckt.

9. Vorrichtung nach einem der Ansprüche 1 bis 7, **dadurch gekennzeichnet, dass** die Fördereinrichtung (5) einen in den Mikrowellenapplikator (6) führenden ersten Förderabschnitt (5a) und einen aus dem Mikrowellenapplikator (6) führenden zweiten Förderabschnitt (5b) aufweist, die im Inneren des Mikrowellenapplikators (6) im Bereich der Applikation der Mikrowellenstrahlung, eine Übergabe einer Wurst (3) vom einen Abschnitt (5a) auf den anderen Abschnitt (5b) ermöglichend, voneinander beabstandet sind.

10. Vorrichtung nach einem der vorangehenden Ansprüche, **dadurch gekennzeichnet, dass** die Fördereinrichtung (5) aus einem für die Mikrowellenstrahlung transparenten Material besteht.

11. Vorrichtung nach einem der vorangehenden Ansprüche, **dadurch gekennzeichnet, dass** die Fördereinrichtung (5) oder jeder Förderabschnitt (5a, 5b) aus einem den Wurststrang oder die Würste tragenden Förderband oder aus zwei übereinander angeordneten, den Wurststrang (2) oder die Würste (3) zwischen sich aufnehmenden Förderbändern (14, 14a, 14b) besteht.

12. Vorrichtung nach Anspruch 10 und 11, **dadurch gekennzeichnet, dass** das Förderband oder die Förderbänder (14, 14a, 14b) aus Polytetraflourethylen, Polypropylen oder Polyethylen bestehen.

13. Vorrichtung nach einem der vorangehenden Ansprüche, **dadurch gekennzeichnet, dass** der Fördereinrichtung (5) ein zuführende zweite Fördereinrichtung (25) vorgeschaltet ist, wobei die den Wurststrang (2) durch den Mikrowellenapplikator (6) fördernde Fördereinrichtung (5) den Wurststrang (2) schneller fördert als die der Wurststrang (2) zuführende zweite Fördereinrichtung (25).

14. Vorrichtung nach Anspruch 9 und einem der Ansprüche 10 bis 12, **dadurch gekennzeichnet, dass** der zweite Förderabschnitt (5b) den Wurststrang (2) schneller fördert als der erste Förderabschnitt (5a).

15. Vorrichtung nach einem der vorangehenden Ansprüche, **dadurch gekennzeichnet, dass** die Mikrowellenstrahlung eine Wellenlänge zwischen 5 cm - 20 cm, insbesondere zwischen 10 cm - 15 cm, vorzugsweise 11 cm - 13 cm aufweist, und/oder die Mikrowellenerzeugungseinrichtung (7) mit einer Leistung von 1 - 50 kW, insbesondere 3 - 30 kW arbeitet.

16. Verfahren zum Behandeln eines Wurststrangs bestehend aus hintereinander angeordneten Würsten mit einer Wursthülle aus einem organischen Material, die im Bereich zwischen zwei Würsten eine Abdrehung aufweist, insbesondere mit einer Behandlungsvorrichtung nach einem der vorangehenden Ansprüche, **dadurch gekennzeichnet, dass** der Wurststrang (2) zumindest im Bereich der Abdrehungen (4) in einem Mikrowellenapplikator (6) mit Mikrowellen, die dem Mikrowellenapplikator (6) von einer extern zu diesem angeordneten Mikrowellenerzeugungseinrichtung (7) zugeführt werden, beaufschlagt werden, wobei die Abdrehungen (4) durch Zug in Stranglängsrichtung gespannt ist.

17. Verfahren nach Anspruch 16, **dadurch gekennzeichnet, dass** die Spannung dadurch erzeugt wird, dass eine den Wurststrang (2) durch den Mikrowellenapplikator (6) fördernde Fördereinrichtung (5) schneller fördert als eine dieser vorgeschaltete, den Wurststrang zuführende Fördereinrichtung (25), oder dass die den Wurststrang durch den Mikrowellenapplikator (6) fördernde Fördereinrichtung (5) einen ersten Förderabschnitt (5a) und einen zweite Förderabschnitt (5b) aufweist, wobei der zweite Förderabschnitt (5b) den Wurststrang (2) schneller fördert als der erste Förderabschnitt (5a).

18. Verfahren nach Anspruch 17, **dadurch gekennzeichnet, dass** die Fördergeschwindigkeitsdifferenz 1 - 5 % beträgt.

## Claims

1. Apparatus for treating a string of sausages comprising a plurality of sausages which are arranged one behind the other and have a sausage casing which is composed of an organic material which has a twisted portion in the region between two sausages, comprising a conveyor device (5) for transporting the string (2) of sausages through a tubular microwave applicator (6) which is connected to a microwave generating device (7) for generating microwave radiation which is to be supplied to the microwave applicator (6), **characterized in that** the twisted portions are stretched by pulling in the longitudinal direction of the string.

2. Apparatus according to Claim 1, **characterized in that** the microwave applicator (6) is a monomode applicator.

3. Apparatus according to Claim 1 or 2, **characterized in that** the tubular microwave applicator (6) has a radial opening (19) for feeding the microwave radiation which is generated externally in relation to the microwave applicator (6).

4. Apparatus according to one of the preceding claims, **characterized in that** the microwave applicator (6) has an external housing (16) and an internal pipe (20) which is arranged in the interior of the said external housing and which is transparent to microwaves and through which the conveyor device (5) conveys the string (2) of sausages.

5. Apparatus according to Claim 4, **characterized in that** the internal pipe (20) is composed of polytetrafluoroethylene, polypropylene or polyethylene.

6. Apparatus according to Claim 4 or 5, **characterized in that** the wall thickness of the internal pipe (20) at least in the region in which the microwave radiation is applied is lower than in the rest of the pipe region.

7. Apparatus according to one of the preceding claims, **characterized in that** the microwave applicator (6), in particular the external housing (16) and the internal pipe (20), can be folded open over the length or locally along a pivot axis.

8. Apparatus according to one of the preceding claims, **characterized in that** the conveyor device (5) extends completely through the microwave applicator (6).

9. Apparatus according to one of Claims 1 to 7, **characterized in that** the conveyor device (5) has a first conveyor section (5a), which leads into the microwave applicator (6), and a second conveyor section (5b), which leads out of the microwave applicator (6), the said first conveyor section and second conveyor section being spaced apart from one another in the interior of the microwave applicator (6) in the region in which the microwave radiation is applied, so as to allow a sausage (3) to be transferred from one section (5a) to the other section (5b).

10. Apparatus according to one of the preceding claims, **characterized in that** the conveyor device (5) is composed of a material which is transparent to microwave radiation.

11. Apparatus according to one of the preceding claims, **characterized in that** the conveyor device (5) or each conveyor section (5a, 5b) comprises a conveyor belt which carries the string of sausages or the sausages or comprises conveyor belts (14, 14a, 14b) which are arranged one above the other and hold the string (2) of sausages or the sausages (3) between them.

12. Apparatus according to Claims 10 and 11, **characterized in that** the conveyor belt or the conveyor belts (14, 14a, 14b) is/are composed of polytetrafluoroethylene, polypropylene or polyethylene.

13. Apparatus according to one of the preceding claims, **characterized in that** a supplying second conveyor device (25) is connected upstream of the conveyor device (5), wherein the conveyor device (5) which conveys the string (2) of sausages through the microwave applicator (6) conveys the string (2) of sausages more quickly than the second conveyor device (25) which supplies the string (2) of sausages.

14. Apparatus according to Claim 9 and one of Claims 10 to 12, **characterized in that** the second conveyor section (5b) conveys the string (2) of sausages more quickly than the first conveyor section (5a).

15. Apparatus according to one of the preceding claims, **characterized in that** the microwave radiation has a wavelength of between 5 cm - 20 cm, in particular of between 10 cm - 15 cm, preferably 11 cm - 13 cm, and/or the microwave generating device (7) operates at a power of 1 - 50 kW, in particular 3-30 kW.

16. Method for treating a string of sausages comprising sausages which are arranged one behind the other and have a sausage casing which is composed of an organic material which has a twisted portion in the region between two sausages, in particular using a treatment apparatus according to one of the preceding claims, **characterized in that** microwaves which are supplied to the microwave applicator (6) by a microwave generating device (7) which is external in relation to the said microwave applicator are applied to the string (2) of sausages at least in the region of the twisted portions (4) in a microwave applicator (6), wherein the twisted portions (4) are stretched by pulling in the longitudinal direction of the string.

17. Method according to Claim 16, **characterized in that** the tension is generated by a conveyor device (5) which conveys the string (2) of sausages through the microwave applicator (6) conveying more quickly than a conveyor device (25) which is connected upstream of the said conveyor device (5) and supplies the string of sausages, or by the conveyor device (5) which conveys the string of sausages through the microwave applicator (6) having a first conveyor section (5a) and a second conveyor section (5b), wherein the second conveyor section (5b) conveys the string (2) of sausages more quickly than the first conveyor section (5a).

18. Method according to Claim 17, **characterized in that** the difference in conveyor speed is 1-5%.

## Revendications

1. Dispositif de traitement d'un chapelet de saucisses, composé de plusieurs saucisses disposées l'une derrière l'autre avec un boyau de saucisse en une matière organique, qui présente une torsion dans la région située entre deux saucisses, comprenant un dispositif de transport (5) pour transporter le chapelet de saucisses (2) à travers un applicateur de microondes tubulaire (6), qui est raccordé à un dispositif de production de microondes (7) pour produire un rayonnement de microondes à fournir à l'applicateur de microondes (6), **caractérisé en ce que** les torsions sont tendues par traction dans la direction longitudinale du chapelet.

2. Dispositif selon la revendication 1, **caractérisé en ce que** l'applicateur de microondes (6) est un applicateur monomode.

3. Dispositif selon la revendication 1 ou 2, **caractérisé en ce que** l'applicateur de microondes tubulaire (6) présente une ouverture radiale (19) pour l'introduction du rayonnement de microondes produit à l'extérieur de l'applicateur de microondes (6).

4. Dispositif selon l'une quelconque des revendications précédentes, **caractérisé en ce que** l'applicateur de microondes (6) présente une enceinte extérieure (16) et un tube intérieur (20) disposé à l'intérieur de celle-ci et transparent pour les microondes, à travers laquelle le dispositif de transport (5) transporte le chapelet de saucisses (2).

5. Dispositif selon la revendication 4, **caractérisé en ce que** le tube intérieur (20) est en polytétrafluoroéthylène, en polypropylène ou en polyéthylène.

6. Dispositif selon la revendication 4 ou 5, **caractérisé en ce que** l'épaisseur de paroi du tube intérieur (20) est plus faible au moins dans la région de l'application du rayonnement de microondes que dans le reste du tube.

7. Dispositif selon l'une quelconque des revendications précédentes, **caractérisé en ce que** l'applicateur de microondes (6), en particulier l'enceinte extérieure (16) et le tube intérieur (20), peut être relevé le long d'un axe de pivotement sur la longueur ou localement.

8. Dispositif selon l'une quelconque des revendications précédentes, **caractérisé en ce que** le dispositif de transport (5) s'étend entièrement à travers l'applicateur de microondes (6).

9. Dispositif selon l'une quelconque des revendications 1 à 7, **caractérisé en ce que** le dispositif de transport (5) présente une première section de transport (5a) conduisant dans l'applicateur de microondes (6) et une deuxième section de transport (5b) conduisant hors de l'applicateur de microondes (6), qui sont disposées à distance l'une de l'autre à l'intérieur de l'applicateur de microondes (6), dans la région de l'application du rayonnement de microondes, permettant un transfert d'une saucisse (3) d'une section (5a) à l'autre section (5b).

10. Dispositif selon l'une quelconque des revendications précédentes, **caractérisé en ce que** le dispositif de transport (5) se compose d'une matière transparente pour le rayonnement de microondes.

11. Dispositif selon l'une quelconque des revendications précédentes, **caractérisé en ce que** le dispositif de transport (5) ou chaque section de transport (5a, 5b) se compose d'une bande transporteuse portant le chapelet de saucisses ou les saucisses ou de deux bandes transporteuses (14, 14a, 14b) disposées l'une au-dessus de l'autre et contenant entre elles le chapelet de saucisses (2) ou les saucisses (3).

12. Dispositif selon la revendication 10 ou 11, **caractérisé en ce que** la bande transporteuse ou les bandes transporteuses (14, 14a, 14b) se composent de polytétrafluoroéthylène, de polypropylène ou de polyéthylène.

13. Dispositif selon l'une quelconque des revendications précédentes, **caractérisé en ce qu'**un deuxième dispositif de transport d'alimentation (25) est disposé en amont du dispositif de transport (5), dans lequel le dispositif de transport (5) transportant le chapelet de saucisses (2) à travers l'applicateur de microondes (6) transporte le chapelet de saucisses (2) plus rapidement que le deuxième dispositif de transport (25) apportant le chapelet de saucisses (2).

14. Dispositif selon la revendication 9 et l'une quelconque des revendications 10 à 12, **caractérisé en ce que** la deuxième section de transport (5b) transporte le chapelet de saucisses (2) plus rapidement que la première section de transport (5a).

15. Dispositif selon l'une quelconque des revendications précédentes, **caractérisé en ce que** le rayonnement de microondes présente une longueur d'onde comprise entre 5 cm et 20 cm, en particulier entre 10 cm et 15 cm, de préférence entre 11 cm et 13 cm, et/ou le dispositif de production de microondes (7) travaille avec une puissance de 1 à 50 kW, en particulier de 3 à 30 kW.

16. Procédé de traitement d'un chapelet de saucisses composé de plusieurs saucisses disposées l'une derrière l'autre avec un boyau de saucisse en une matière organique, qui présente une torsion dans la région située entre deux saucisses, en particulier avec le dispositif de traitement selon l'une quelconque des revendications précédentes, **caractérisé en ce que** le chapelet de saucisses (2) est soumis dans un applicateur de microondes (6), au moins dans la région des torsions (4), à des microondes qui sont fournies à l'applicateur de microondes (6) par un dispositif de production de microondes (7) disposé à l'extérieur de celui-ci, dans lequel les torsions (4) sont tendues par traction dans la direction longitudinale du chapelet.

17. Procédé selon la revendication 16, **caractérisé en ce que** la tension est produite par le fait qu'un dispositif de transport (5) transportant le chapelet de saucisses (2) à travers l'applicateur de microondes (6) le transporte plus rapidement qu'un dispositif de transport (25) apportant le chapelet de saucisses et disposé en amont de celui-ci, ou que le dispositif de transport (5) transportant le chapelet de saucisses à travers l'applicateur de microondes (6) présente une première section de transport (5a) et une deuxième section de transport (5b), dans lequel la deuxième section de transport (5b) transporte le chapelet de saucisses (2) plus rapidement que la première section de transport (5a).

18. Procédé selon la revendication 17, **caractérisé en ce que** la différence de vitesse de transport vaut 1 à 5%.
